# EUROPÄISCHE PATENTSCHRIFT

(11) **EP 2 553 287 B1**
(45) Veröffentlichungstag und Bekanntmachung des Hinweises auf die Patenterteilung: **04.03.2015**
(21) Anmeldenummer: 11720718.3
(22) Anmeldetag: 31.03.2011
(51) Int. Cl.: F16D 1/033

(54) **KUPPLUNG**
COUPLING
ACCOUPLEMENT

(30) Priorität: 06.10.2010 DE 102010047466; 31.03.2010 DE 102010013720
(43) Veröffentlichungstag der Anmeldung: 06.02.2013
(73) Patentinhaber: Invenion GmbH, 48324 Sendenhorst (DE)
(72) Erfinder: SCHÜRMANN, Erich, 48324 Sendelhorst (DE)
(74) Vertreter: Roche, von Westernhagen & Ehresmann
(86) Internationale Anmeldenummer: PCT/DE2011/000351
(87) Internationale Veröffentlichungsnummer: WO 2011/120510

(56) Entgegenhaltungen:
- DE-A1-102008 030 496
- DE-C1- 19 710 002
- DE-U1- 9 411 268
- FR-A1- 2 334 004
- US-A- 2 303 032
- US-A- 3 557 574
- US-A- 5 051 071
- US-A- 5 149 255

## Beschreibung

Die Erfindung betrifft ein Konstruktionselement zur stirnseitigen Verbindung, insbesondere zur Verbindung zweier Wellen, Achsen oder Flansche. Es geht hier um eine fertigungstechnisch besonders vorteilhafte Gestaltung einer formschlüssigen Verbindung insbesondere für Wellen, Achsen und Flansche mit Hilfe einer stirnseitig angeordneten Geometrie. Die Verbindung kann z.B. angewendet werden für eine Verbindung zwischen einer Antriebs- und einer Motorwelle, zwischen einem Schraubendreher und einem Schraubenkopf oder zwischen den Stäben eines Tragwerks.

Die einfachste aus dem Stand der Technik bekannte stirnseitige Verbindung von Wellen oder Bolzen ist die stirnseitige, zentrale Verschraubung mit einer zylindrischen Zentrierung gegen Querverschiebung und lediglich reibschlüssiger Drehmomentübertragung. Hier besteht die akute Gefahr des Lösens der Schraubverbindung. Bei zentrischen, axialen Schraubverbindungen ist es für eine sichere Wellenverbindung unbedingt erforderlich, eine formschlüssige Sicherung gegen Verdrehen vorzusehen. Es gibt eine Vielzahl von Verdrehsicherungen. Einerseits sind Stirnverzahnungen bekannt, (z.B DE 10 2008 030 496 A1) deren Wirkflächen sich wesentlich radial und axial erstrecken. Zu dieser Gruppe der Stirnverzahnungen gehören die vielfältigen Klauenkupplungen und die Voith - Hirth-Verzahnungen.

Typischer Nachteil dieser Wellenverbindungen mit ihren radialen Wirkflächen und tangentialen Kraftwirkungen sind die aufwändige Fertigung der stirnseitigen Konturen. Die Fertigung erfolgt üblicherweise nicht in einer Aufspannung und auf verschiedenen Werkzeugmaschinen. Andere Wellenverbindungen mit im Wesentlichen tangential und axial verlaufenden Wirkflächen benötigen Naben und gehören zu der Gruppe der Welle- / Nabeverbindungen und benötigen somit einen größeren Bauraum als die Wellenverbindungen mit stirnseitigen Wirkflächen.

Spiralförmig verlaufende Wirkflächen haben den entscheidenden Nachteil, dass kein exakt gleicher Abstand zwischen den Spiralgängen realisiert werden kann und damit die Herstellung aufwändig ist. In einer archimedischen Spirale ist zwar der radiale Abstand konstant, aber nicht der senkrechte Abstand in der Spirale.

Das Ziel der vorliegenden Erfindung ist die Lösung der Aufgabe, eine formschlüssige Kupplung mit stirnseitigen Wirkflächen zu schaffen, die einen geringen Bauraum beansprucht und einen geringen Fertigungsaufwand erfordert. Darüber hinaus sollen mit der Kupplung hohe Kräfte, wie z. B. Drehmomente und Querkräfte, übertragbar sein.

Die Aufgabe wird gemäß einem ersten Aspekt der Erfindung durch eine Kupplung mit den Merkmalen des Anspruchs 1, gemäß einem zweiten Aspekt der Erfindung durch eine Kupplung mit den Merkmalen des Anspruchs 2 und gemäß einem dritten Aspekt der Erfindung durch eine Kupplung mit den Merkmalen des Anspruchs 5 gelöst.

Kupplung im Sinne der Erfindung ist eine lösbare oder unlösbare Verbindung von wenigstens zwei Teilen zur Übertragung von Drehmomenten und/oder Querkräften. Z.B. können beide bewegbaren Teile eine gemeinsame Drehachse aufweisen. Querkräfte sind z.B. Kräfte, die rechtwinklig zu der axialen Fügerichtung gerichtet sind.

Jede Nut einer ersten Stirnverzahnung und einer komplementär ausgebildeten zweiten Stirnverzahnung der Kupplung weist über den Verlauf ihrer Längsmittellinie eine konstante Breite auf. Z.B. weist ein Nutboden eine konstante Breite auf.

Bei dem Begriff "Nut konstanter Breite" handelt es sich im Sinne der Erfindung z.B. um die Breite der Nut gemessen rechtwinklig zu der axialen Fügerichtung und rechtwinklig zu der Längsachse der Nut.

Bei dem Begriff "Steg konstanter Breite" handelt es sich im Sinne der Erfindung z.B. um die Breite des Stegs gemessen rechtwinklig zu de axialen Fügerichtung und rechtwinklig zu der Längsachse des Stegs.

Die einander zugewandten komplementären Verzahnungen werden z.B. durch eine axiale Relativbewegung in Eingriff bewegt. "Axiale Fügerichtung" ist im Sinne der Erfindung z.B. eine in Richtung der Achse der Relativbewegung ausgeführte Bewegung.

Eine Besonderheit besteht darin, dass die komplementären, formschlüssig ineinandergreifenden Verzahnungen der zu kuppelnden Teile derart ausgebildet sind, dass sie z.B. auf einer Drehmaschine mit integrierter Fräseinrichtung in einer Aufspannung, d.h. ohne Werkzeugwechsel, oder auf einer Fräsmaschine in einer Aufspannung hergestellt werden können.

Der geringe Fertigungsaufwand ergibt sich z.B. dadurch, dass der Nutenverlauf und der Stegverlauf der stirnseitig an den zusammenwirkenden Kupplungselementen ausgebildeten Struktur einer mathematischen Funktion gehorchen, die eine konstante Breite der Nut bzw. des Stegs ermöglichen. Der konstante Abstand entspricht bei der Fräsbearbeitung z.B. dem Fräserdurchmesser. Als entsprechende mathematische Funktion, welche die Form der Nut bzw. des Stegs bestimmt, sollen hier z.B. Kreisbögen und / oder Geraden gewählt werden, die einen gemeinsamen Kreismittelpunkt oder unterschiedliche Kreismittelpunkte besitzen.

Die konstante Breite und Höhe der Stege und Nuten ist sowohl bei der Fräsbearbeitung vorteilhaft, da bestenfalls nur je Stirnverzahnung eine Fräserbahn gefahren werden muss, als auch bei dem Umformen und Urformen, da beim Umformen ein gleichmäßiger Materialfluss erforderlich ist und beim Urformen eine gleichmäßige Abkühlung gewährleistet ist. Dieses gilt sowohl für metallische Werkstoffe als auch für Kunststoffe.

Bei nur radial und axial sich erstreckenden, stirnseitigen Wirkflächen wirken die Umfangskräfte stets senkrecht auf die Wirkflächen und die Reibkräfte können in dieser Konstellation nicht für die Drehmomentübertragung genutzt werden, Erfindungsgemäß könner jedoch die Reibkräfte, die sich mittelbar aus den Umfangskräften ergeben, für die Drehmomentübertragung genutzt werden. Die erfindungsgemäße Verbindung ist trotz der reibschlüssigen Effekte eindeutig eine formschlüssige Verbindung. Diese Verbindung zeigt eine sehr vorteilhafte, zusätzliche reibschlüssige Wirkung.

Denn bei einer relativen Verdrehung der zu kuppelnden Teile um ihre Drehachse nähern sich durch eine Verdrehung der zusammenwirkenden Stirnverzahnungen sowie eine resultierende relative Bewegung der Kontaktflächen zueinander die zusammenwirkenden Kontaktflächen einander an. Die Gleitbewegung der Kontaktflächen wird jedoch durch die Reibung zwischen den Kontaktflächen der zu verbindenden Bauteile behindert. Insbesondere bei einer dynamischen Wechselbeanspruchung ist der Reibschlusseffekt der Kontaktflächen sehr vorteilhaft. Aus diesem Grunde kann eine zentral angeordnete Schraubverbindung ohne Lösegefahr angewendet werden.

Bei einer Beanspruchung durch Querkräfte, d.h. Kräfte, die rechtwinklig zu der axialen Fügerichtung gerichtet sind, liegt eine gleich hohe Belastbarkeit vor wie bei einer entsprechenden zylindrischen Zentrierung. Durch mehrere, gleichmäßig verteilte und somit mehrgängige Kreissegmentkonturen kann die gesamte Stirnfläche zur Kraftübertragung genutzt werden, was zu einer Wellenverbindung mit sehr geringem Raumbedarf führt.

Erfindungsgemäß umfasst wenigstens eine der Stirnverzahnungen mindest eine Nut konstanter Breite. Jede Stirnverzahnung kann eine oder mehrere Nuten umfassen. Die Stirnverzahnungen sind komplementär ausgebildet, d.h., in eine Nut einer Stirnverzahnung greift ein Steg der anderen Stirnverzahnung. Die Nut und der Steg weisen eine im Querschnitt zu dem Längsverlauf der Nut bzw. des Stegs komplementäre Form auf.

Die fertigungstechnisch einfachste Lösung sind Nuten in Form von mehrgängigen Halbkreisen. Mit einer Fräsvorrichtung an einer Drehmaschine oder mit einer Fräsmaschine lässt sich die erfindungsgemäße, stirnseitige Halbkreiskontur in einer Aufspannung des Werkstücks zusammen mit der übrigen zylindrischen Bearbeitung durchführen. Die konventionellen Wellenverbindungen machen dagegen eine weitaus aufwändigere Bearbeitung erforderlich.

Die Längsmittellinie der Nut bildet gemäß dem ersten Aspekt der Erfindung in wenigstens einem Abschnitt der Nut einen Kreisbogen um einen ersten Mittelpunkt und in wenigstens einem anderen Abschnitt der Nut einen Kreisbogen um zumindest einen zweiten Mittelpunkt. Der erste Mittelpunkt und der zweite Mittelpunkt sind z.B. voneinander beabstandet. Die Längsmittellinie der Nut kann mehrere Kreisbögen um den ersten Mittelpunkt und / oder mehrere Kreisbögen um den zweiten Mittelpunkt bilden. "Zumindest einen zweiten Mittelpunkt" bedeutet im Sinne der Erfindung, dass die Längsmittellinie der Nut auch wenigstens einen Kreisbogen um einen dritten, vierten oder weitere Mittelpunkte bilden kann.

Zur Erzeugung der erfindungsgemäßen Stirnverzahnung gemäß dem ersten Aspekt der Erfindung sind zwei Kreisbogenmittelpunkte erforderlich, wenn Drehmomente und Querkräfte übertragen werden sollen. Teilt man die Stirnfläche der zu kuppelnden Bauteile, z.B. von zwei Wellen, durch eine Gerade mittig in eine rechte und eine linke Hälfte und legt zwei Kreismittelpunkte auf jeder Stirnfläche fest, die jeweils spiegelbildlich zu einem auf der Geraden festgelegten Zentrum angeordnet sind, so kann man ausgehend von den Kreismittelpunkten bezüglich der Geraden zu jeweils einer Seite der Stirnfläche Kreisbögen in Form von Nuten erzeugen, die einen konstanten Abstand besitzen und z.B. einen maximalen Bogenwinkel von 180° haben. Zwischen den kreisbogenförmigen Nuten verbleibt z.B. bei wenigstens einer Stirnverzahnung mindestens ein Steg. Der Steg einer Stirnverzahnung greift in die Nut der jeweils anderen Stirnverzahnung ein.

Sämtliche Kreisbogenstrukturen einer Stirnflächenhälfte sind z.B. einem der Kreismittelpunkte zugeordnet. Die Kreismittelpunkte sind z.B. von dem Zentrum der Stirnverzahnung beabstandet angeordnet, insbesondere weisen zwei Kreismittelpunkte den gleichen Abstand vor dem Zentrum der Stirnverzahnung auf. Die Kreisbögen sind z.B. wenigstens teilsweise als Halbkreis ausgebildet. Die Kreismittelpunkte sind z.B. auf der Geraden angeordnet, welche die Stirnfläche teilt.

Alternativ kann in jeder Stirnflächenhälfte spiegelbildlich zu dem Zentrum wenigstens ein Kreismittelpunkt von der Geraden beabstandet angeordnet sein. Die kreisbogenförmigen Abschnitte der Nut bzw. des Stegs, die um einen ersten Kreismittelpunkt gebildet sind können z.B. durch Geraden mit den kreisbogenförmigen Abschnitten der Nut bzw. des Stegs verbunden sein, die um einen zweiten Kreismittelpunkt gebildet sind.

Je größer der Abstand der Kreisbogenmittelpunkte ist, je höher sind die übertragbaren Drehmomente. Je größer der Abstand der Kreisbogenmittelpunkte ist, je mehr Nuten (auch "Gänge" genannt) sind erforderlich. Bei dem geringsten Abstand der beiden Kreisbogenmittelpunkte ergibt sich eine eingängige Kontur. Bei der eingängigen Kontur entspricht der Abstand der Kreisbogenmittelpunkte dem zweifachen Wert der Nut- oder der Stegbreite. Die Nutbreite entspricht etwa dem möglichen Fräserdurchmesser.

Je nach Anwendungsfall, je nach der Größe des zu übertragenden Drehmomentes und je nach dem zur Verfügung stehenden Durchmesser der Kupplung kann man die Anzahl der Gänge der Kontur und damit die Breite der Stege und der Nuten frei wählen. Der geringste Fertigungsaufwand ergibt sich bei einer eingängigen Kontur, weil sich dabei der größtmögliche Fräserdurchmesser und die kürzeste Fräserbahn ergeben, was allerdings zu Lasten des übertragbaren Drehmomentes geht.

Der Kreisbogen ist einem ersten Kreismittelpunkt oder zumindest einem zweiten Kreismittelpunkt zugeordnet. Die kreisbogenförmigen Abschnitte mehrerer Nuten einer Stirnverzahnung können z.B. wenigstens zwei unterschiedlichen Kreismittelpunkten zugeordnet sein. Die kreisbogenförmigen Abschnitte einer Nut können darüber hinaus wenigstens zwei unterschiedlichen Kreismittelpunkten zugeordnet sein.

Gemäß einer Ausführungsform bildet die Längsmittellinie der Nut wenigstens zwei Kreisbögen, die abwechselnd einem ersten Kreismittelpunkt und einem zweiten Kreismittelpunkt zugeordnet sind. Die Die Abschnitte der Nut, die Kreisbögen um unterschiedliche Kreismittelpunkte bilden, können unmittelbar benachbart angeordnet sein. Alternativ kann zwischen den kreisbogenförmigen Abschnitten, die unterschiedlichen Kreismittelpunkten zugeordnet sind auch ein gerader Abschnitt ausgebildet sein.

Gemäß dem zweiten Aspekt der Erfindung umfasst wenigstens eine der Stirnverzahnungen mindestens eine Nut konstanter Breite, wobei die Längsmittellinien der Nuten von wenigstens einem Kreisbogen und mindestens einer Geraden gebildet sind. Kreisbögen und gerade Abschnitte können sich z.B. abwechseln. Der gerade Abschnitt der Nut kann z.B. zwischen zwei kreisbogenförmigen Abschnitten der Nut angeordnet sein. Alternativ kann der kreisbogenförmige Abschnitt zwischen zwei geraden Abschnitten angeordnet sein. Die Kreisbögen weisen z.B: einen unterschiedlichen Radius gemessen vom Kreismittelpunkt auf.

Gemäß einer weiteren Ausführung weist der von der Nut oder dem Steg gebildete Kreisbogen einen Mittelpunktswinkel von α ≤ 180° auf. Jede Nut und jeder Steg in Form eines Kreisbogens mit einem bestimmten Radius ist z.B. maximal als Halbkreis ausgebildet.

Die folgenden Ausführungsformen beziehen sich auf alle zwei Aspekte der Erfindung.

Eine vorteilhaft erweiterte Ausführungsform der erfindungsgemäßen Wellenverbindung ist dadurch gekennzeichnet, dass die Wirkflächen sich einerseits entlang von Halbkreisen erstrecken und die radiale Steigung von einer axialen Steigung überlagert wird. "Radiale Steigung" bedeutet im Sinne der Erfindung eine Steigung radial zu dem Zentrum der Stirnverzahnung. "Axiale Steigung" bedeutet im Sinne der Erfindung eine Steigung in Richtung der axialen Fügerichtung der zu kuppelnden Teile.

Eine weitere Ausführungsform ist dadurch gekennzeichnet, dass alle Nutenbreiten und alle Stegbreiten identisch sind. Die Nuten und Stege haben z.B. in Längsrichtung des Nutenverlaufs eine konstante Breite. Bei Nuten oder Stegen, bei denen die Breite sich über den Verlauf der Höhe der Nut ändert, ist die Breite in einer bestimmten Höhe über den Längsverlauf konstant. Z.B. sind die Nutbreite am Nutboden und die Stegbreite am Stegfuß im Wesentlichen konstante. Alle Nuten und Stege haben z.B. dieselbe Breite.

Eine weitere Ausführungsform ist dadurch gekennzeichnet, dass die Nuten und / oder die Stege untereinander eine identische Breite aufweisen. Wenn mehrere Nuten und mehrere Stege vorhanden sind, können alle Nuten die gleiche Nutbreite aufweisen. Die Nutbreite kann sich z.B. von der Breite der Stege unterscheiden. Alle Stege weisen untereinander dieselbe Breite auf.

Eine weitere Ausgestaltung der Erfindung ist dadurch gekennzeichnet, dass der Nutquerschnitt trapezförmig ausgebildet ist und der Stegquerschnitt komplementär zu der Nut trapezförmig ausgebildet ist. Trapezförmig bedeutet im Sinne der Erfindung die Seitenwände der Nut bilden zu dem Nutboden einen stumpfen Winkel. Mit den Merkmalen dieser Ausführungsform wird das Fügen der Stirnverzahnungen und damit der Kupplungsteile erleichtert. Die Kontaktflächen zwischen der ersten Stirnverzahnung und der zweiten Stirnverzahnung sind die Seitenwände der Nut einer Stirnverzahnung, an welchen die Seitenwände des Stegs der anderen Stirnverzahnung anliegen und gegeneinander spielfrei verspannt werden können. Da zwischen einem Boden der Nut und einer Außenfläche des Stegs ein Spalt verbleibt, kann der Übergang des Notbodens zu den Seitenwänden der Nut mit einem Radius versehen sein, ohne dass der Steg zwangsläufig mit einem komplementären Radius versehen sein muss. Selbstverständlich kann jedoch der Steg einen solchen komplementären Radius aufweisen.

Eine weitere Ausführungsform ist dadurch gekennzeichnet, dass die erste Stirnverzahnung lösbar mit der zweiten Stirnverzahnung in Eingriff bringbar ist. Die Stirnverzahnungen können dann beliebig oft außer Eingriff bewegt oder in Eingriff gebracht werden. Das Lösen oder in Eingriff bringen kann z.B. durch eine axiale translatorische Bewegung stattfinden. Der Eingriff kann durch eine lösbare Verbindung gesichert sein. Mittels einer Zentriervorrichtung, die erste der ersten Stirnverzahnung zugeordnete Führungsmittel und zweite, der zweiten Stirnverzahnung zugeordnete Führungsmittel aufweist, können die komplementären Stirnverzahnungen z.B. vereinfacht in Eingriff geführt werden.

Eine weitere Ausführungsform ist dadurch gekennzeichnet, dass die erste Stirnverzahnung unlösbar mit der zweiten Stirnverzahnung verbunden ist. Nachdem die Kupplungselemente in Eingriff gebracht wurden, können sie z.B. verschweißt, verklebt oder verlötet werden und sind damit unlösbar miteinander verbunden.

Gemäß einem vierten Aspekt betrifft die Erfindung eine Kupplungsvorrichtung zur Verbindung von wenigstens zwei Bauteilen mit mindestens zwei Kupplungen gemäß einem der vorbeschriebenen Aspekte der Erfindung.

Es war Aufgabe der Erfindung eine Kupplungsvorrichtung zu schaffen, welche wenigstens zwei formschlüssige Kupplungen mit stirnseitigen Wirkflächen aufweist, einen geringen Bauraum beansprucht und einen geringen Fertigungsaufwand erfordert. Darüber hinaus sollen mit der Kupplung hohe Kräfte, wie z.B. Drehmomente und Querkräfte, übertragbar sein. Mittels der Kupplungsvorrichtung sollen Stirnflächen verbindbar sein, welche in unterschiedliche Raumrichtungen weisen.

Die Aufgabe wird gemäß einem vierten Aspekt der Erfindung gelöst durch eine Kupplungsvorrichtung mit den Merkmalen des Anspruchs 9.

Die Kupplungsvorrichtung umfasst wenigstens zwei Kupplungen, wobei eine der komplementären Stirnverzahnungen der Kupplung dem Bauteil zugeordnet ist und wobei die andere der Stirnverzahnungen einem Kupplungselement zugeordnet ist, welches wenigstens zwei Stirnverzahnungen aufweist. Die Stirnverzahnung kann z.B. an den Bauteilen lösbar oder unlösbar befestigt sein. Das Kupplungselement kann z.B. in der Form eines Würfels oder eines anderen vielseitigen Körpers ausgebildet sein, dessen Seitenflächen in unterschiedliche Richtungen weisen. Wenigstens zwei Kubusseiten weisen Stirnverzahnungen auf. Bauteile, deren Stirnverzahnungen in unterschiedliche Raumrichtungen weisen, können mittels des Kupplungselements verbunden werden und die Kupplungsvorrichtung bilden. Jeweils eine Stirnverzahnung des Kupplungselements und eine Stirnverzahnung des Bauteils sind derart gegenüberliegend angeordnet und durch eine axiale Fügebewegung in Eingriff bringbar. Ein Tragwerk kann von einer Vielzahl, von Bauteilen gebildet sein, die mittels mehrerer Kupplungselemente miteinander verbunden sind.

Weitere Vorteile der Erfindung ergeben sich aus der Beschreibung von in den Fig. dargestellten Ausführungsbeispielen. Es zeigen:
Fig. 1, eine schematische Draufsicht auf eine Stirnverzahnung mit einer kreisförmigen Außenkontur,
Fig. 2 eine schematische Draufsicht auf eine Stirnverzahnung mit einer rechteckigen Außenkontur,
Fig. 3 eine schematische Darstellung von zwei Wellen, die mit der erfindungsgemäßen Kupplung verbunden sind,
Fig. 4 eine schematische Schnittdarstellung gemäß Schnittlinie IV-IV in Fig. 3,
Fig. 5 eine schematische teilweise geschnittene Seitenansicht eines Kardangelenks, welches mittels der erfindungsgemäßen Kupplung mit einer Hohlwelle verbunden ist,
Fig. 6 eine schematische Schnittdarstellung gemäß Schnittlinie VI-VI in Fig. 5,
Fig. 7 eine schematische teilweise geschnittene Darstellung einer Riemenscheibe die mittels der erfindungsgemäßen Kupplung mit einer Welle verbunden ist,
Fig. 8 eine schematische Schnittdarstellung gemäß Schnittlinie VIII - VIII in Fig. 7,
Fig. 9 eine schematische, teilweise geschnittene Darstellung eines Kupplungsflansches ohne Nabe, welcher mit der erfindungsgemäßen Kupplung mit einer Welle verbunden ist,
Fig 10 eine Schnittdarstellung gemäß Schnittlinie X - X in Fig. 9
Fig. 11 eine Ansicht gemäß Ansichtspfeil XI in Fig. 10
Fig. 12 eine Schnittdarstellung von zwei Rundrohren, die mittels der erfindungsgemäßen Kupplung miteinander verbunden sind,
Fig. 13 eine schematische Schnittdarstellung gemäß Schnittlinie XIII - XIII in Fig. 12,
Fig. 14 eine schematische Draufsicht auf zwei Rundrohre, die mittels der erfindungsgemäßen Kupplung miteinander verbunden sind,
Fig. 15 eine Schnittdarstellung der Rundrohre gemäß Fig. 14,
Fig. 16 eine Schnittdarstellung gemäß Schnittlinie XVI - XVI in Fig. 15,
Fig. 17 eine schematische Schnittdarstellung eines Ausführungsbeispiels von zwei im Querschnitt rechteckförmigen im rechten Winkel zueinander angeordneten Rohren, die mittels der erfindungsgemäßen Kupplung miteinander verbunden sind,
Fig. 18 eine schematische Schnittdarstellung gemäß Schnittlinie XVIII - XVIII in Fig. 17,
Fig. 19 eine schematische Schnittdarstellung eines Tragwerks von im Querschnitt rechteckförmigen Rohren, die mittels eines würfelförmigen Elements mit der erfindungsgemäßen Kupplung miteinander verbunden sind,
Fig. 20 eine Ansicht gemäß Ansichtspfeil XX in Fig. 19,
Fig. 21 eine teilweise geschnittene schematische Darstellung von im Querschnitt I-förmigen Trägern, die mittels der erfindungsgemäßen Kupplung miteinander verbunden sind,
Fig. 22 eine schematische Darstellung des Herstellungsverfährens einer erfindungsgemäßen Stirnverzahnung,
Fig. 23a, eine schematische Ansicht einer ersten Stirnverzahnung gemäß einem ersten Ausführungsbeispiel, wobei die Stirnverzahnung eine Nut und einen Steg umfasst,
Fig. 23b eine schematische Ansicht einer zweiten zu der ersten Stirnverzahnung gemäß Fig. 23a komplementär ausgebildeten Stirnverzahnung, wobei die Stirnverzahnung ebenfalls eine Nut und einen Steg umfasst,
Fig. 24a und 24b, eine schematische Ansicht der ersten und der zweiten Stirnverzahnung gemäß einem zweiten Ausführungsbeispiel, wobei die Stirnverzahnung gemäß Fig. 24b zwei Nuten und einen Steg umfasst und die Stirnverzahnung gemäß Fig. 24a komplementär ausgebildet ist und zwei Stege sowie eine Nut umfasst,
Fig. 25a und 25b, eine schematische Ansicht der ersten und der zweiten Stirnverzahnung gemäß einem anderen Ausführungsbeispiel, wobei die Stirnverzahnung gemäß Fig. 25b drei Nuten und zwei Stege umfasst und wobei die zweite Stirnverzahnung komplementär ausgebildet ist,
Fig. 26a und 26b eine schematische Ansicht der ersten und der komplementär ausgebildeten zweiten Stirnverzahnung gemäß einem anderen Ausführungsbeispiel, wobei die Stirnverzahnung gemäß Fig. 26b vier Nuten und drei Stege umfasst,
Fig. 27a und 27b eine schematische Ansicht der ersten und der komplementär ausgebildeten zweiten Stirnverzahnung gemäß einem anderen Ausführungsbeispiel, wobei die Stirnverzahnung gemäß Fig. 27b fünf Nuten und vier Stege umfasst,
Fig. 28a und 28b eine schematische Ansicht der ersten und der komplementär ausgebildeten zweiten Stirnverzahnung gemäß einem anderen Ausführungsbeispiel, wobei die Stirnverzahnung gemäß Fig. 28b sechs Nuten und fünf Stege umfasst,
Fig. 29a und 29b eine schematische Ansicht der ersten und der komplementär ausgebildeten zweiten Stirnverzahnung gemäß einem weiteren Ausführungsbeispiel, wobei die Stirnverzahnung gemäß Fig. 29b vier Nuten und drei Stege umfasst, und wobei jede Nut und jeder Steg von zwei Kreisbögen in Kombination mit dazwischen befindlichen Geraden gebildet ist,
Fig. 30a und 30b eine schematische Ansicht der ersten und der komplementär ausgebildeten zweiten Stirnverzahnung gemäß einem weiteren Ausführungsbeispiel, wobei jede Nut und jeder Steg von einer Kombination von einem Kreissegment und wenigstens zwei geraden Abschnitten gebildet ist, und wobei alle Kreisbögen einen gemeinsamen Kreismittelpunkt aufweisen,
Fig. 31 a und 31b, eine schematische Ansicht der ersten und der komplementär ausgebildeten zweiten Stirnverzahnung, nicht Teil der Erfindung wobei jede Stirnverzahnung zwölf Nuten aufweist, wobei jede Nut gerade ausgebildet ist.
Fig. 32, eine schematische Seitenansicht der erfindungsgemäßen Kupplung gemäß Fig. 3, wobei eine erste Welle mit einer ersten Stirnverzahnung und eine zweite Welle mit einer zweiten, komplementär ausgebildeten Stirnverzahnung versehen ist, wobei sich die erste und die zweite Stirnverzahnung außer Eingriff befinden und wobei die Stege und die Nuten der komplementären Stirnverzahnungen trapezförmig ausgebildet sind.
Fig. 33 in Anlehnung an Fig. 32 eine schematische Seitenansicht der Wellen gemäß Fig. 3, wobei sich die Stirnverzahnungen in Eingriff befinden,
Fig 34 in Anlehnung an Fig 32 eine schematische Seitenansich der Wellen, wobei sich die erste und die zweite Stirnverzahnung außer Eingriff befinden und wobei die Seitenwände der Nuten bezüglich der Mittelachse a parallel ausgebildet sind.

Eine Kupplung insgesamt wird in den Zeichnungen mit der Bezugsziffer 50 bezeichnet. Gleiche Bezugszeichen in den unterschiedlichen Ausführungsbeispielen bezeichnen auch bei Hinzufügung oder Weglassen von Buchstaben entsprechende Teile.

Insgesamt lassen sich die möglichen Maschinenelemente, die mit der erfindungsgemäßen Kreisbogen-Stirnverzahnung vorteilhaft, lösbar verbunden werden können und insbesondere wiederholt passgenau montiert werden können, grundsätzlich in zwei Gruppen unterteilen. Einerseits die Verbindungen der klassischen Maschinenelemente der Antriebstechnik und andererseits die Verbindungen für die Elemente des Maschinenbaus bzw. des Stahlbaus.

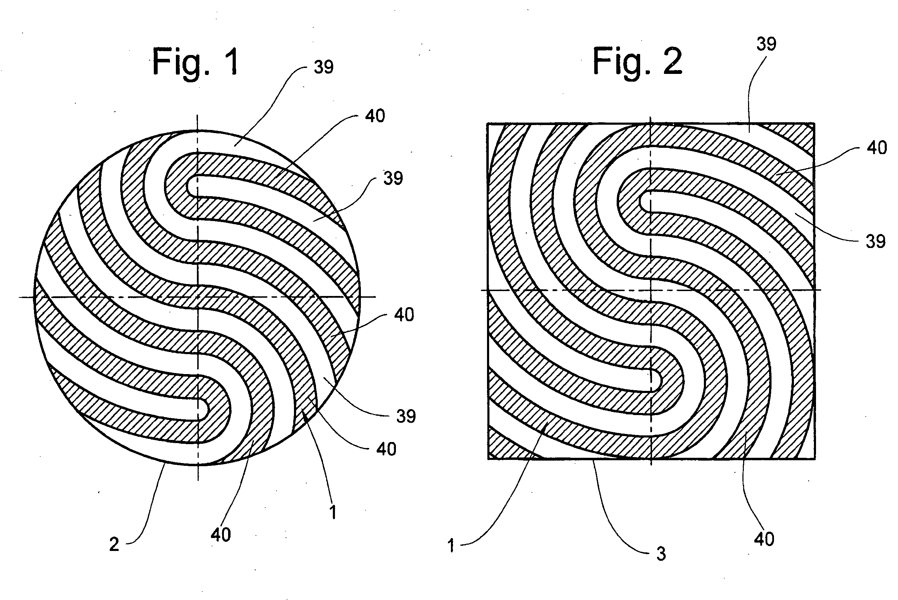

Bei den folgenden Beispielen der erfindungsgemäßen Kupplung gibt es z.B. die formschlüssig fügbaren Wirkflächen mit der erfindungsgemäßen Stirnverzahnung 1 gemäß der Fig. 1 und 2. Die Stirnverzahnung 1 kann in der Draufsicht mit verschiedenen Außenkonturen, wie z.B. rund und eckig, ausgebildet sein. Bei dem Ausführungsbeispiel gemäß Fig. 1 bildet die Stirnverzahnung 1 eine runde Außenkontur 2. Gemäß dem Ausführungsbeispiel gemäß Fig. 2 weist die Stirnverzahnung 1 eine viereckige Außenkontur 3 auf. Die Fig. 1 und 2 zeigen jeweils lediglich eine der Stirnverzahnungen der Kupplung. Die jeweils komplementäre Stirnverzahnung ist nicht dargestellt.

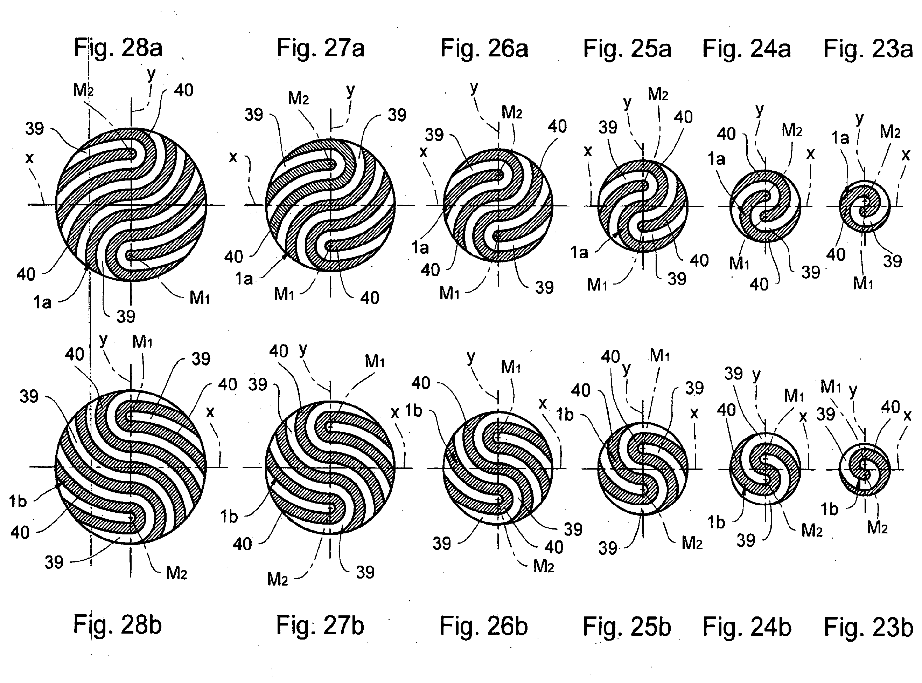

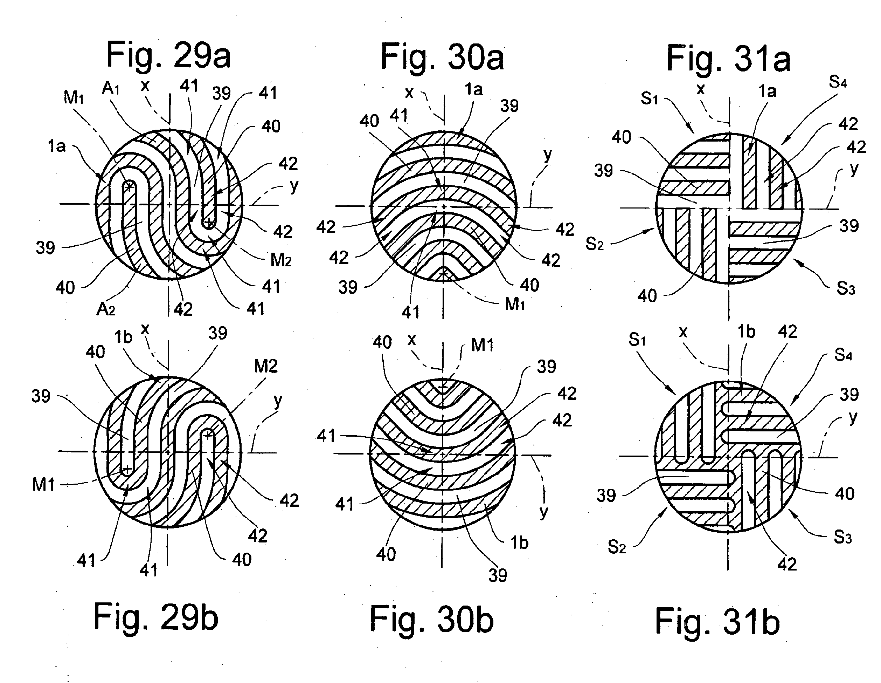

Die folgenden Darstellungen zeigen neben der Anordnung der erfindungsgemäßen Kreisbogenstirnverzahnungen 1a, 1b auch die Verspannung der gefügten Wirkflächen, hier beispielhaft mit Schraubverbindungen 12. In den Fig. 1 bis 29a/29b sind Stirnverzahnungen gemäß dem ersten Aspekt der Erfindung dargestellt, wobei gemäß den Fig. 1 bis 28a/28b Kreismittelpunkte M1 und M2 auf einer die Stirnverzahnung halbierenden Geraden liegen und wobei der erste Kreismittelpurakt M1 bei den Stirnverzahnungen gemäß der Fig 29a/29b in einer ersten Flächenhälfte A1 der Stirnverzahnung und der Kreismittelpunkt A2 in einer zweiten Flächenhälfte der Stirnverzahnung angeordnet ist.

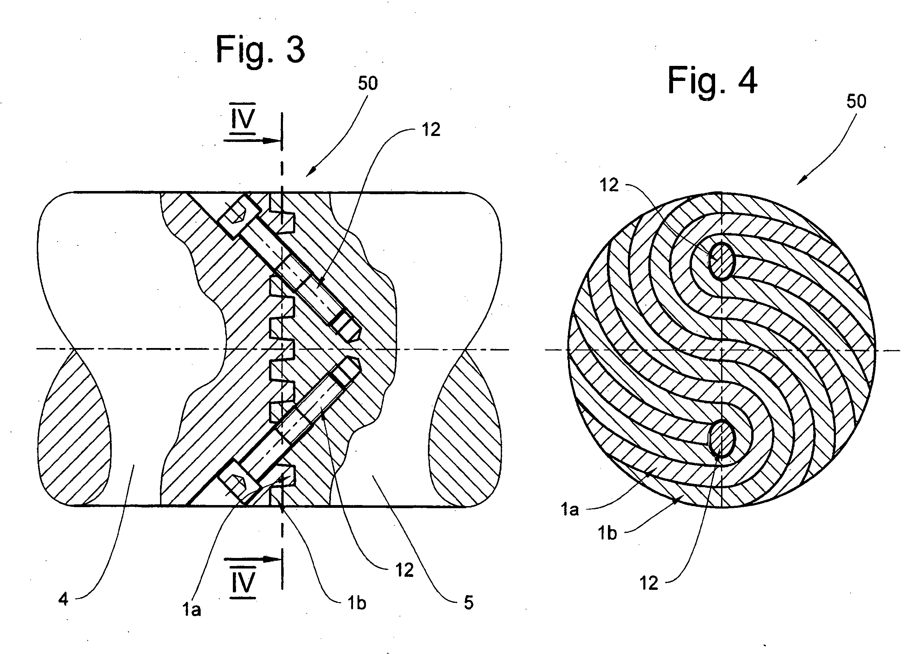

Beispielhaft für einen vorteilhaften Einsatz der erfindungsgemäßen Verbindung in der Antriebstechnik wird die stirnseitige Verbindung von zwei Wellen in Fig. 3 gezeigt. Die beiden Wellen 4 und 5 mit den komplementären in Eingriff befindlichen Stirnverzahnungen 1 a und 1 b werden mit zwei Schraubverbindungen 12 verspannt. In dem Ausführungsbeispiel gemäß Fig. 3 dient die Kupplung der Übertragung von Drehmomenten und Querkräften zwischen der Welle 4 und der Welle 5. Die Mittelachsen a der ersten Welle 4 und der zweiten Welle 5 fluchten miteinander und bilden eine gemeinsame Drehachse.

Fig. 4 zeigt eine Schnittansicht gemäß Schnittlinie IV - IV in Fig. 3. Die Stege 40 der Stirnverzahnung 1a greifen in die Nuten 39 der Stirnverzahnung 1b. Die Stege 40 der Stirnverzahnung 1b greifen in die Nuten 39 der Stirnverzahnung 1a.

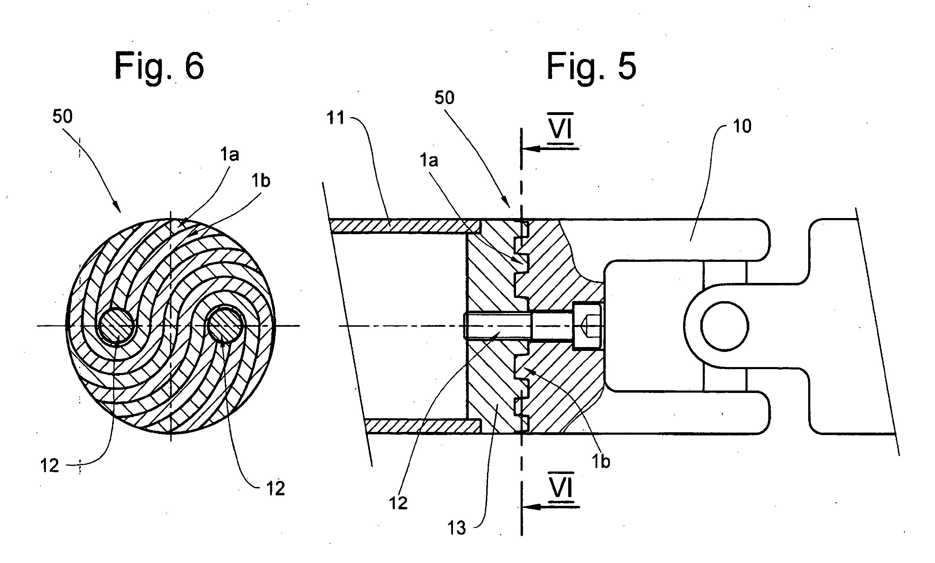

Die Verbindung von Maschinenelementen der Antriebstechnik an einem Wellenende ist in den Fig. 5 bis 11 dargestellt. In Figur 5 ist ein Kardangelenk 10 mit einer Hohlwelle 11 verbunden, wobei die Schraubverbindungen 12 die Wirkflächen verspannen. Sowohl die eingeschweißte Platte 13 als auch das Kardangelenk 10 tragen die erfindungsgemäße kreisbogenförmigen Stirnverzahnung 1. Das Kardangelenk 10 ist nicht wie üblich mit der Hohlwelle 11 verschweißt und kann im Reparaturfall separat getauscht werden.

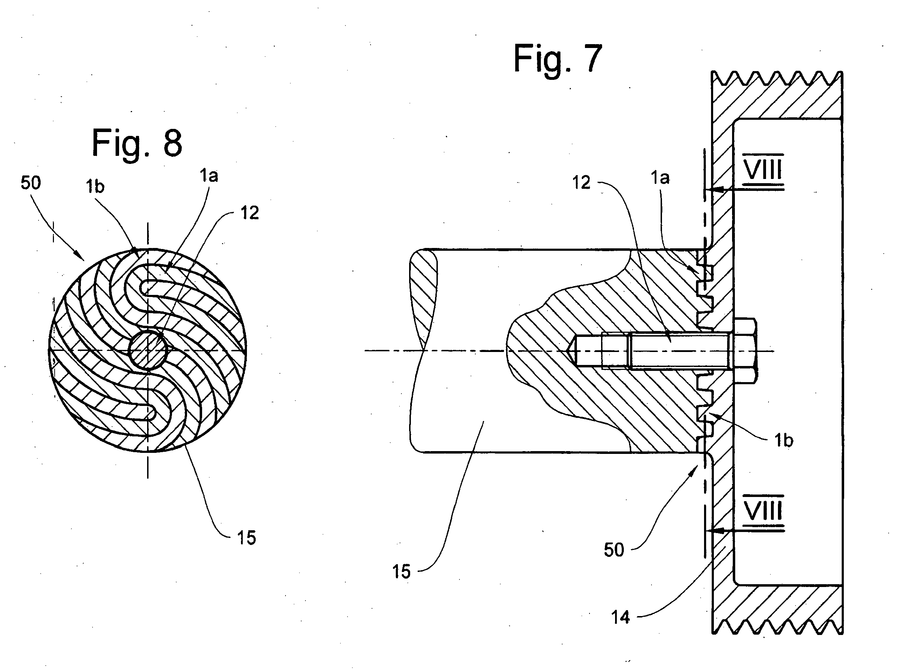

In Figur 7 ist als Beispiel eine Riemenscheibe 14 ohne Nabe mit einem Wellenende 15 verbunden und wird von einer Schraubverbindung 12 verspannt. Gemäß Fig. 7 ist das Wellenende 15 stirnseitig mit der Stirnverzahnung 1 versehen. Die Stirnverzahnung 1a des Wellenendes 15 steht in Eingriff mit einer Stirnverzahnung 1b der Riemenscheibe 14. In Fig. 8 ist eine Schnittansicht gemäß Schnittlinie VIII - VIII in Fig. 7 gezeigt.

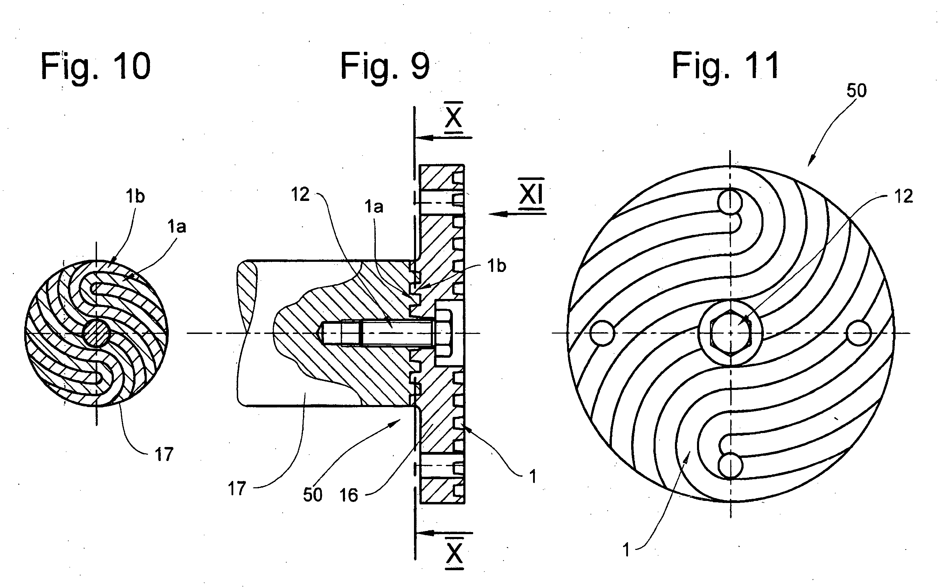

In Figur 9 ist ein Kupplungsflansch 16 ohne Nabe dargestellt. De Kupplungsflansch ist mit einer erfindungsgemäßen Stirnverzahnung 1 b ausgestattet und mit einem Wellenende 17 verbunden, welches die komplementäre Stirnverzahnung 1 a aufweist. Der Kupplungsflansch 16 und das Wellenende 17 sind mittels einer Schraubverbindung 12 verspannt.

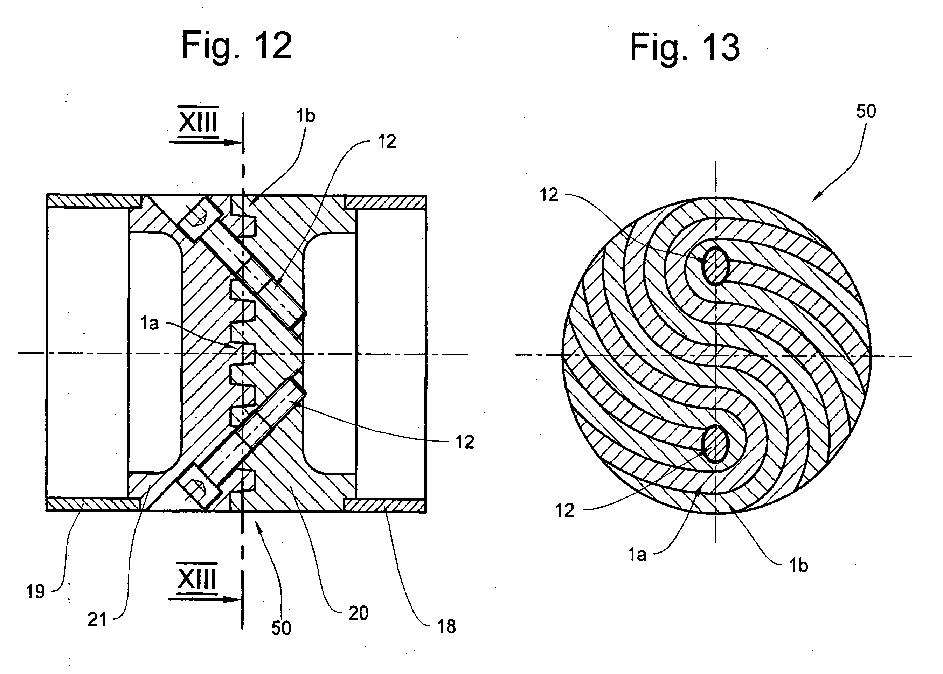

Beispielhaft für den vorteilhaften Einsatz der erfindungsgemäßen Verbindung als Verbindungstechnik für lösbare und wiederholt passgenau montierbare Elemente im allgemeinen Maschinenbau wird in Figur 12 die axiale Verbindung von zwei Rundrohren gezeigt. An ein Rundrohr 18 ist stirnseitig eine Platte 20 und an ein Rundrohr 19 ist stirnseitig eine Platte 21 eingeschweißt. Die Platte 20 ist mit einer Stirnverzahnung 1a und die Platte 21 mit einer komplementären Stirnverzahnung 1b versehen. Die Stirnverzahnungen 1a und 1b befinden sich in Eingriff. Um zu verhindern, dass sich die Stirnverzahnungen 1a und 1b außer Eingriff bewegen, sind sie mit Schraubverbindungen 12 aneinander befestigt und gegeneinander verspannt.

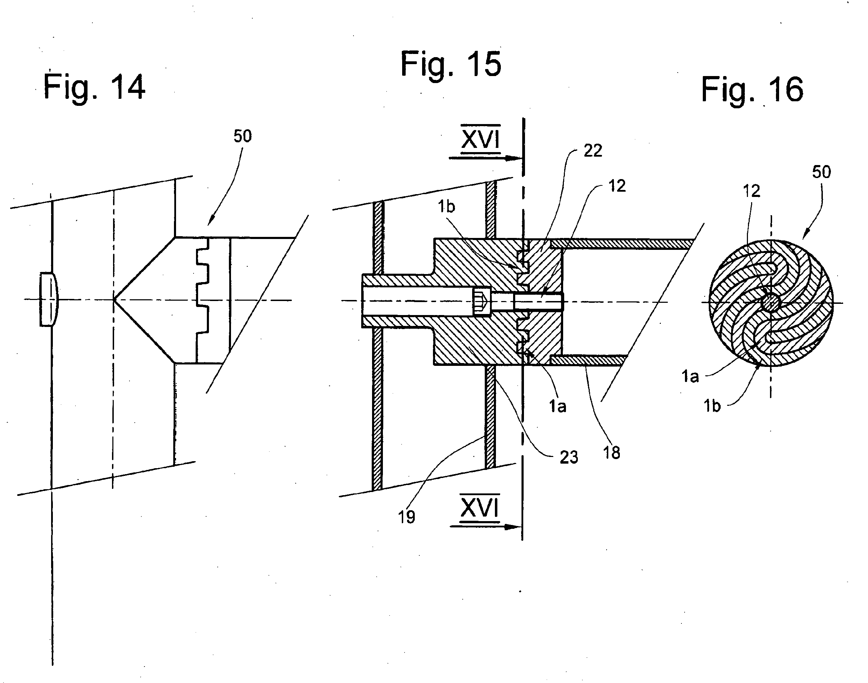

In Figur 15 ist die beispielhaft rechtwinklige Verbindung von zwei Rundrohren 18 und 19 gezeigt. An dem Rohr 18 ist eine Platte 22 mit der erfindungsgemäßen kreisbogenförmigen Stirnverzahnung 1a angeschweißt. An Rohr 19 ist quer zu einer Längsachse das Teil 23 eingeschweißt, welches ebenso die komplementäre erfindungsgemäße kreisbogenförmige Stirnverzahnung 1 b aufweist. Das Teil 23 wird mit der Platte 22 verschraubt 12.

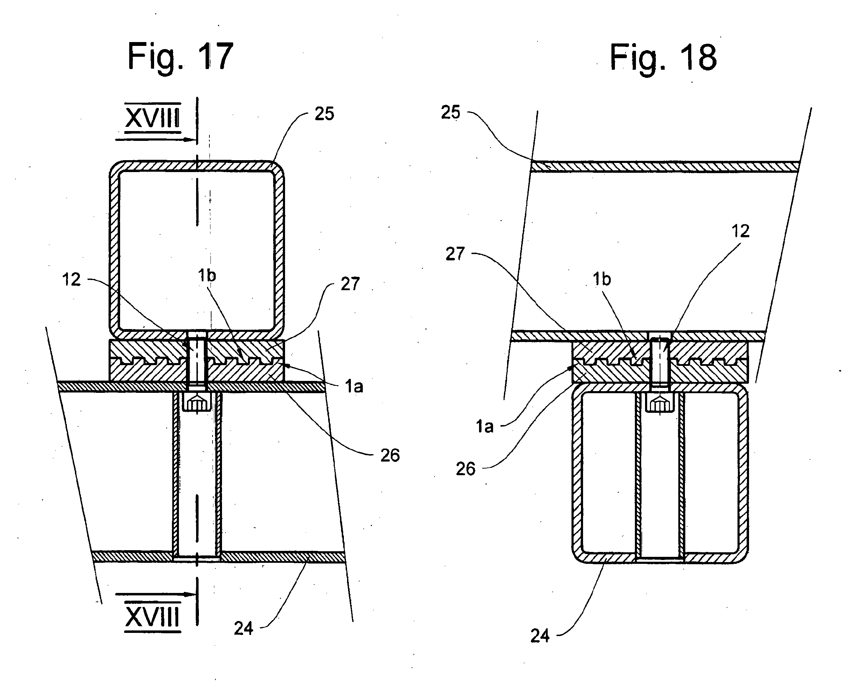

Für die Verbindung von Rechteckrohren oder von Quadratrohren sind in den Figuren 17, 18 und 19 beispielhafte Lösungen dargestellt. Äußerst vorteilhaft ist dabei im Sondermaschinenbau und im Werkzeugmaschinenbau die wiederholt passgenaue Montagemöglichkeit.

In den Fig. 17 und 18 ist ein Ausführungsbeispiel dargestellt, wobei zwei Quadratrohre 24 und 25, die sich versetzt kreuzen mittels der erfindungsgemäßen Kreisbogenstirnverzahnung 1 aneinander befestigt sind. Die im Querschnitt quadratischen Rohre 24 und 25 sind je mit einer Flanschplatte 26 und 27 versehen, wobei jede Flanschplatte 26 und 27 eine erfindungsgemäße Kreisbogenstirnverzahnung 1 a bzw. 1 b besitzt. Die Flanschplatten 26 und 27 sind mit einer Schraubverbindung 12 aneinander befestigt und gegeneinander verspannt.

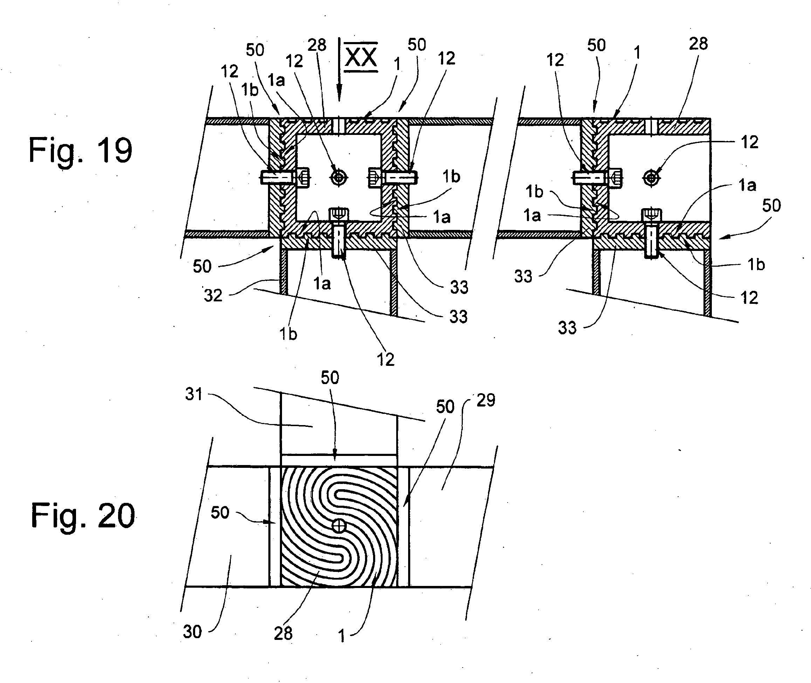

Für die Verbindung von Quadratrohren, die häufig im Sondermaschinenbau eingesetzt werden, wird ein vorteilhaftes Kupplungselement mit, in verschiedenen Richtungen angeordneten, erfindungsgemäßen Kreisbogenstirnverzahnungen vorgeschlagen. In Figur 20 ist ein derartiges Kupplungselement 28 mit Anschlussmöglichkeiten für fünf Quadratrohre im eingebauten Zustand mit vier Quadratrohren 29, 30, 31 und 32 (Quadratrohr ist 32 lediglich in Fig. 19 erkennbar) dargestellt. Figur 19 zeigt beispielhaft vier Quadratrohre 29, 30, 32 mit jeweils einer eingeschweißten Stirnplatte 33, die jeweils mit der erfindungsgemäßen Kreisbogenstirnverzahnung 1 versehen sind und mit Schraubverbindungen 12 verschraubt werden.

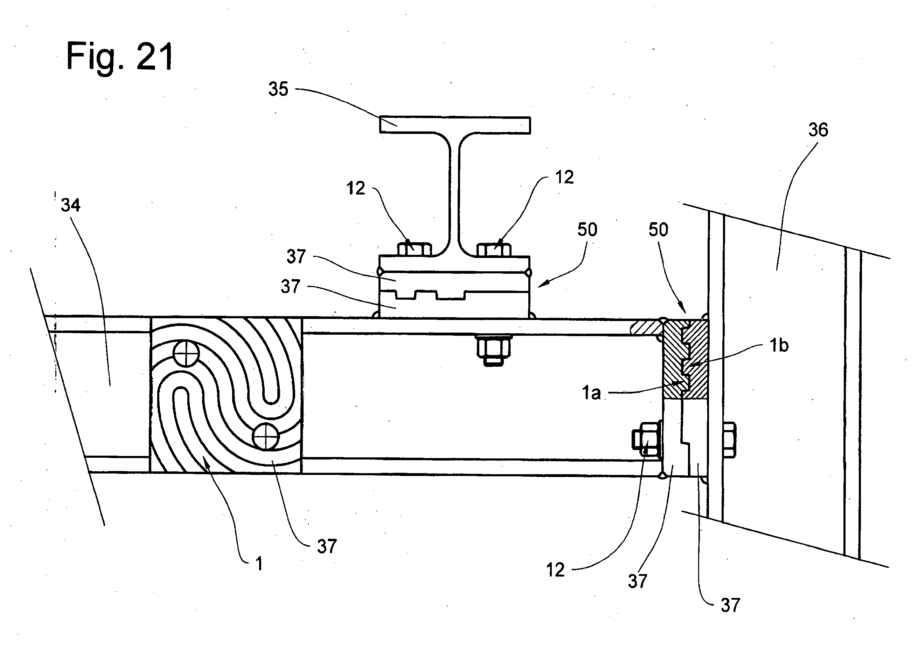

Für die Verbindung von Profilen, wie sie beispielsweise im Stahlbau Verwendung finden, können bei hochbelasteten Flanschverbindungen ebenfalls die erfindungsgemäßen kreisbogenförmigen Stirnverzahnungen vorteilhaft eingesetzt werden. In Fig. 21 sind einige Vorschläge beispielhaft dargestellt. Fig. 21 zeigt die Verbindung von drei Doppel-T-Profilen 34 35, 36 mit jeweils angeschweißten Flanschplatten 37, die auf der Flanschseite mit der erfindüngsgemäßen kreisbogenförmigen Stirnverzahnung 1 ausgestattet sind und mit Schraubverbindungen 12 verspannt werden.

Die Schraubverbindungen in den vorangegangenen Beispielen können sowohl durch lösbare andere Verbindungen, wie z.B. Rasthaken und Querkeile, als auch durch unlösbare Verbindungen, wie z.B. Niete ersetzt werden.

Als Herstellverfahren für die erfindungsgemäße Kreisbogenstirnverzahnung 1, 1a, 1b bieten sich die bekannten spanenden und spanlosen Verfahren an.

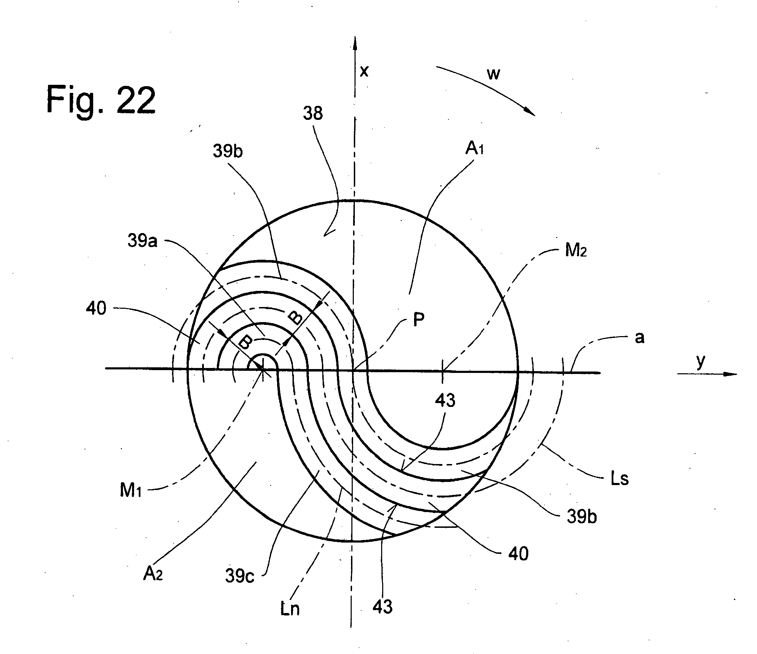

Zur Herstellung einer ersten Stirnverzahnung gemäß Fig. 22. bearbeitet z.B. ein nicht dargestellter Fräser die Oberfläche 38, indem zunächst eine halbkreisförmige erste Nut 39a mit der Längsmittelachse LN und einem Radius der Länge 1xB (gemessen zwischen M1 und LN) um den Mittelpunkt M1 in der Halbkreisfläche A1 gefräst wird. Anschließend wird in der Halbkreisfläche A2 die Nut 39a fortgesetzt, indem eine halbkreisförmige Nut um den Mittelpunkt M2 mit einem Radius der Länge 5xB gefräst wird. Die Mittelpunkte M1 und M2 sind auf der y-Achse angeordnet.

Danach fräst der Fräser eine halbkreisförmige zweite Nut 39b mit einem Radius der Länge 3xB um den Kreismittelpunkt M1 in der Halbkreisfläche A1, deren Längsmittelachse LN z.B. von der Längsmittelachse LN der ersten Nut 39a um eine Länge 2xB beabstandet ist. Sodann wird in der Halbkreisfläche A2 die Nut 39b fortgesetzt, indem eine halbkreisförmige Nut um den Mittelpunkt M2 mit einem Radius der Länge 3xB gefräst wird. Es entsteht eine Verzahnung mit identischen Nut- und Stegbreiten. Als Abstände zwischen den Kreismittelpunkten können beliebige ganzzahlige Vielfache der Breite B verwendet werden.

Dieser Vorgang wird fortgesetzt, bis die Halbkreisflächen A1 und A2 vorzugsweise vollständig von Nuten 39 und Stegen 40 bedeckt sind. Alternativ könnte gemäß einem nicht dargestellten Ausführungsbeispiel jede der Stirnflächen auch lediglich teilweise mit Nuten und Stegen bedeckt sein. Die zweite, nicht dargestellte Stirnverzahnung ist zu der ersten, in Fig. 22 dargestellten Stirnverzahnung komplementär ausgebildet. D.h., die Nuten der zweiten Stirnverzahnung sind derart ausgebildet, dass sie in die Stege 40 der ersten Stirnverzahnung formschlüssig eingreifen können. Die Stege der zweiten Stirnverzahnung sind analog derart ausgebildet, dass sie in die Nuten 39 der ersten Stirnverzahnung eingreifen können.

Zwischen den Nuten 39a und 39b verbleibt ein Steg 40 der Breite B mit der Längsmittelachse LS. Alle Nuten 39 und Stege 40 weisen die Breite B auf. Die Breite B entspricht dem Fräserdurchmesser.

In den Fig. 23a bis 31a ist jeweils die Stirnverzahnung 1a in den Fig. 23b bis 31b die Stirnverzahnung 1 b dargestellt, wobei die Stirnverzahnungen gemäß der Fig. 23a und 23b, 24a und 24b, 25a und 25b usw. jeweils komplementär zueinander ausgebildet sind. Die Fig. 23 bis 28 zeigen außerdem, dass die erfindungsgemäße Stirnverzahnung auf Flächen unterschiedlicher Größe ausgebildet sein kann. In den Fig. 23a bis 31a und 23b bis 31b sind die Stege schraffiert und die Nuten unschraffiert dargestellt.

Gemäß einem ersten, in den Fig. 23a und 23b dargestellten Ausführungsbeispiel umfasst die Stirnverzahnung 1 b gemäß Fig. 23b eine Nut 39 und einen Steg 40. Die Stirnverzahnung 1a gemäß Fig. 23a ist komplementär zu der Stirnverzahnung 1 b gemäß Fig. 23b ausgebildet.

Ein weiteres Ausführungsbeispiel ist in den Fig. 24a und 24b dargestellt. Die Stirnverzahnung 1b gemäß Fig. 24b umfasst zwei Nuten 39 und die Stirnverzahnung 1a gemäß Fig. 24a entsprechend zwei Stege 40, die mit den Nuten der Stirnverzahnung 1b zusammenwirken.

Bei einem Ausführungsbeispiel gemäß Fig. 25a und 25b weist die Stirnverzahnung 1b gemäß Fig. 25b drei Nuten 39 sowie zwei Stege 40 auf. Die Die Stirnverzahnung 1 a gemäß Fig. 25a ist komplementär zu der Stirnverzahnung 1 b ausgebildet und umfasst drei Stege 40 sowie zwei Nuten 39.

In einem in den Fig. 26a und 26b weist die Stirnverzahnung 1 b vier von Halbkreisbögen gebildete Nuten 39 sowie drei von Halbkreisbögen gebildete Stege 40 auf. Der Abstand der Kreismittelpunkte M1 und M2 entspricht z.B. dem sechsfachen der Nutbreite. In Fig. 26a ist die zu der Stirnverzahnung 1 b gemäß Fig. 26b komplementäre Stirnverzahnung 1 a dargestellt. Sie umfasst vier Stege 40 sowie drei Nuten 39. Die Stege 40 sowie die Nuten 39 sind von Halbkreisbögen mit den Mittelpunkten M1 und M2 gebildet.

Bei dem Ausführungsbeispiel gemäß Fig. 27a und 27b umfasst die Stirnverzahnung 1b fünf Nuten 39, und bei dem Ausführungsbeispiel gemäß der Fig. 28a und 28b umfasst die Stirnverzahnung 1b sechs Nuten 39.

Von dem Ausführungsbeispiel gemäß der Fig. 23a und 23b bis zu dem Ausführungsbeispiel gemäß der Fig. 28a und 28b nimmt der Abstand der Kreismittelpunkte M1 und M2 von dem Zentrum P zu.

Bei einem Ausführungsbeispiel gemäß Fig. 29a und 29b weist die Stirnverzahnung 1a drei Nuten 39 und vier Stege 40 auf, die von Kreisbögen 41 kombiniert mit geraden Abschnitten 42 gebildet sind. Die geraden Abschnitte 42 befinden sich zwischen den Kreisbögen 41. Die Mittelpunkte M1 und M2 befinden sich bei diesem Ausführungsbeispiel nicht auf der y-Achse. Dem Nutenverlauf folgend sind die Kreisbögen 41 abwechselnd um die Kreismittelpunkte M1 und M2 ausgebildet. Die Stirnverzahnung 1 b umfasst gemäß Fig. 29b vier Nuten 39 sowie drei Stege 40, welche um die Kreismittelpunkte M1 und M2 gebildet sind.

Gemäß dem zweiten Aspekt der Erfindung weist in einem in den Fig. 30a und 30b dargestellten Ausführungsbeispiel die Stirnverzahnung 1a gemäß Fig. 30a fünf Nuten 39 und sechs Stege 40 auf, die von Kreisbögen 41 und geraden Abschnitten 42 gebildet sind, wobei sich die Kreisbögen 41 zwischen den geraden Abschnitte 42 befinden. Die Kreisbögen 41 sind um den Kreismittelpunkt M1 gebildet. Die Stirnverzahnung 1 b gemäß Fig. 30b ist komplementär ausgebildet und umfasst sechs Nuten 39 und fünf Stege 40. Bei der Stirnverzahnung 1b sind die Kreisbögen 23 um den Kreismittelpunkt M1 gebildet.

In einem Ausführungsbeispiel, nicht Teil der Erfindung welches in den Fig. 31 a und 31 b dargestellt ist, weisen die Stirnverzahnungen 1a und 1b jeweils vier Sektoren S1, S2, S3 und S4 auf. Jeder Sektor S1, S2, S3 und S4 umfasst z.B. drei Nuten 39, die gerade ausgebildet und parallel zueinander sind. Die Nuten des Sektors S2 sind bezüglich des Sektors S1 um 90° versetzt angeordnet. Die Nuten 39 des Sektors S3 sind mit demselben Winkel versetzt zu dem Sektor S2 und die Nuten 39 des Sektors S4 versetzt zu dem Sektor S3 angeordnet. Die Stirnverzahnung 1 a ist komplementär zu der Stirnverzahnung 1 b ausgebildet.

Insbesondere, wenn die Nuten 39 und Stege 40 eine identische Breite aufweisen, ergibt sich eine fertigungstechnisch einfache Herstellung, da jeweils nur eine Fräserbahn erforderlich ist.

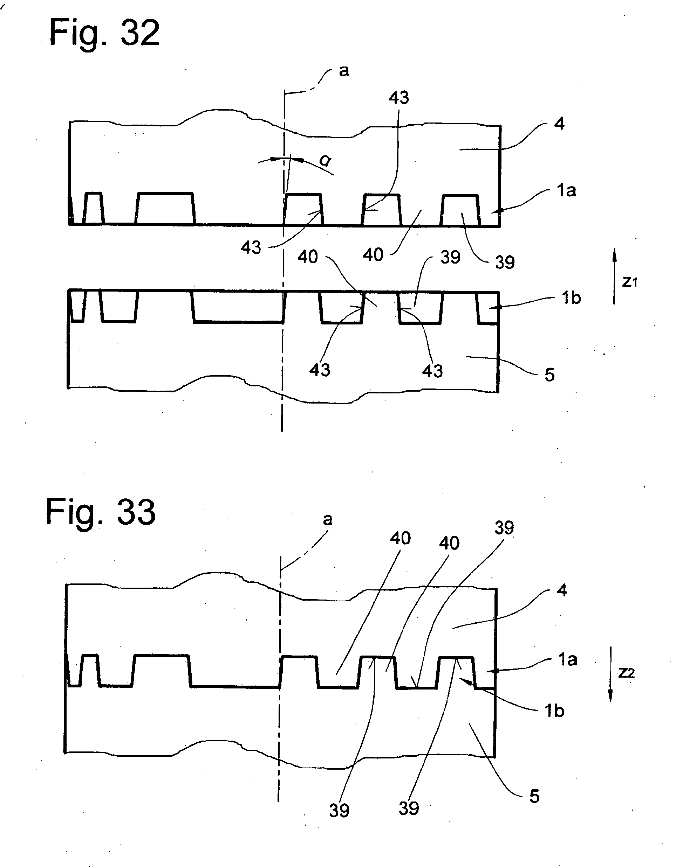

In den Fig. 32 und 33 sind in Anlehnung an Fig. 3 die Stirnverzahnungen 1a und 1b der Wellen 4 und 5 dargestellt. Gemäß Fig. 32 sind die Wellen 4 und 5 außer Eingriff bewegt. In Fig. 33 befinden sich die Welle 4 und die Welle 5 in Eingriff, so dass ein Drehmoment zwischen den Wellen 11 und 12 übertragbar ist. Außenflächen 43a und 43b der Stege 40 sind in einem Winkel α zu der Mittelachse a, z.B. trapezförmig, ausgebildet. Die Nuten 39 sind komplementär zu den Stegen 40 ausgebildet und weisen z.B. ebenfalls eine Trapezform auf.

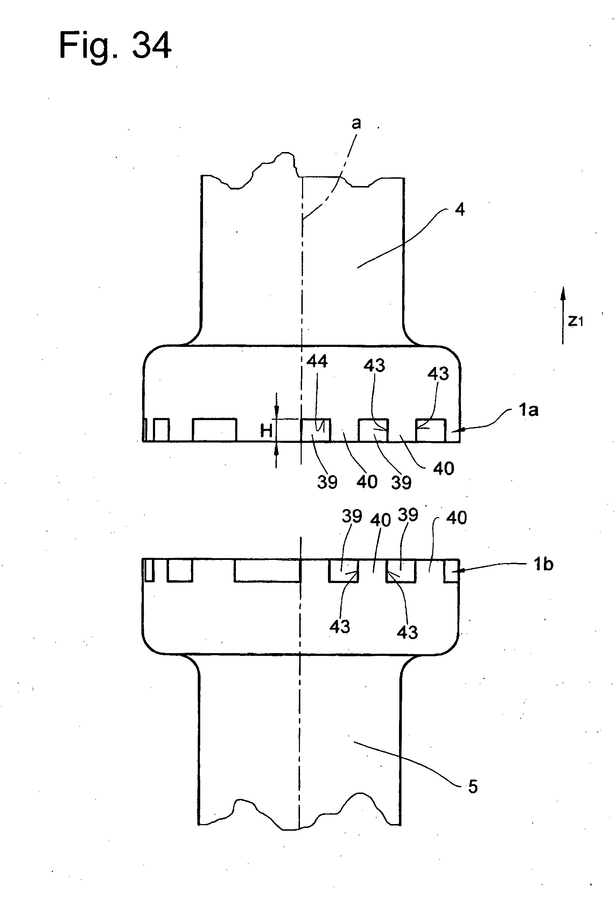

Gemäß einem anderen Ausführungsbeispiel, welches in Fig. 34 dargestellt ist, sind die Außenflächen 43a und 43b parallel zu der Mittelachse a und im rechten Winkel zu einem Nutboden 44 ausgebildet. Die Stirnverzahnung 1 a und 1 b der Wellen 4 und 5 befinden sich gemäß Fig. 34 außer Eingriff. Die Stirnverzahnungen 1a und 1b sind komplementär ausgebildet und können durch eine axiale Relativbewegung der Welle 5 in Richtung z relativ zu der Welle 4 formschlüssig lösbar in Eingriff bewegt werden.

Die Stirnverzahnungen weisen jeweils wenigstens eine Nut 39 der Breite B und der Höhe H auf. Seitlich ist der Nutboden 20 jeweils von einem Steg 40 begrenzt.

Wenn in Bezug auf die Ausführungsbeispiele die Formulierung verwendet wurde, dass die Nuten 39 oder die Stege 40 gerade oder kreissegmentförmig ausgebildet sind, so ist damit der Verlauf der Längsmittelachse LN der Nut 39 oder der Verlauf der Längsmittelachse LS des Stegs 40 gemeint.

Sämtliche Stirnverzahnungen der Ausführungsbeispiele lassen sich jeweils in einer Aufspannung des Werkstücks mit nur jeweils einem Fräskopf fertigen. Es ist jeweils nur eine ebene Fräserbahn erforderlich, wenn die Nuten und die Stege eine über den Längsverlauf konstante Breite aufweisen. Mit den erfindungsgemäßen Stirnverzahnungen lassen sich Momente W sowie Querkräfte parallel zu der x-Achse und der y-Achse (siehe Fig. 22) zwischen den zu verbindenden Bauteilen übertragen.

## Patentansprüche

1. Kupplung mit Stirnverzahnung zur Übertragung von Drehmomenten und / oder Querkräften zwischen einem ersten Teil (4), welches mit einer ersten Stirnverzahnung (1, 1a) versehen ist und einem zweiten Teil (5), welches mit einer komplementär zu der ersten Stirnverzahnung ausgebildeten zweiten Stirnverzahnung (1, 1b) versehen ist, wobei mindestens eines der Teile insbesondere eine Welle, eine Achse, ein Bolzen oder ein Flansch ist und wobei die erste Stirnverzahnung (1, 1a) formschlüssig mit der zweiten Stirnverzahnung (1, 1b) in Eingriff bringbar ist, **dadurch gekennzeichnet, dass** wenigstens eine der Stirnverzahnungen (1, 1a, 1b) mindestens eine Nut (39) konstanter Breite (B) umfasst, wobei die Längsmittellinie (LN) der Nut (39) in wenigstens einem Abschnitt der Nut (39) einen Halbkreisbogen (41) mit einem ersten Kreismittelpunkt (M1) und in wenigstens einem anderen Abschnitt der Nut (39) einen Halbkreisbogen mit einem zweiten Kreismittelpunkt (M2) bildet.

2. Kupplung nach Anspruch 1, **dadurch gekennzeichnet, dass** die Längsmittellinie (LN) der Nut (39) wenigstens zwei Halbkreisbögen bildet, die abwechselnd dem ersten Kreismittelpunkt (M1) und dem zweiten Kreismittelpunkt (M2) zugeordnet sind.

3. Kupplung nach dem Oberbegriff des Anspruchs 1, **dadurch gekennzeichnet, dass** wenigstens eine der Stirnverzahnungen (1, 1 a, 1b) mindestens eine Nut (39) konstanter Breite (B) umfasst und dass die Längsmittellinien (LN) der Nuten (39) wenigstens einen kreisbogenförmigen Abschnitt (41) und wenigstens einen geraden Abschnitt (42) ausbilden, wobei der kreisbogenförmige Abschnitt (41) einem Mittelpunkt (M1) zugeordnet ist.

4. Kupplung nach Anspruch 3, **dadurch gekennzeichnet, dass** jeder Kreisbogen einen Mittelpunktswinkel von α ≤ 180° aufweist.

5. Kupplung nach einem der vorangehenden Ansprüche, **dadurch gekennzeichnet, dass** wenigstens Abschnitte (42) der Längsmittellinien (LN) der Nuten (39) parallel zueinander angeordnet sind.

6. Kupplung nach einem der vorangehenden Ansprüche, **dadurch gekennzeichnet, dass** wenigstens eine der Stirnverzahnungen wenigstens zwei Nuten und / oder wenigstens zwei Stege umfasst und dass die Nuten (39) untereinander eine identische Nutbreite (B) und die Stege (40) untereinander eine identische Stegbreite (B) aufweisen.

7. Kupplung nach einem der vorangehenden Ansprüche, **dadurch gekennzeichnet, dass** alle Nutbreiten (B) und alle Stegbreiten (B) identisch sind.

8. Kupplung nach einem der vorangehenden Ansprüche, **dadurch gekennzeichnet, dass** die Nut (39) im Querschnitt zu einer Längsachse (LN) trapezförmig ausgebildet ist.

9. Kupplungsvorrichtung zur Verbindung von wenigstens zwei Bauteilen mit mindestens zwei Kupplungen (50) gemäß einem der vorangehenden Ansprüche, wobei eine der komplementären Stirnverzahnungen (1b) der Kupplung (50) dem Bauteil (29, 30, 31, 32) und die andere der Stirnverzahnungen (1a) einem Kupplungselement (28), welches wenigstens zwei Stirnverzahnungen (1a) aufweist, zugeordnet ist.

## Claims

1. Coupling with face toothing for transmitting torques and/or transverse forces between a first part (4), which is provided with a first face toothing system (1, 1a), and a second part (5) which is provided with a second face toothing system (1, 1b) which is complementary to said first face toothing system, wherein at least one of the parts is, in particular, a shaft, an axle, a bolt or a flange and wherein the first face toothing system (1, 1a) can be brought into engagement with the second face toothing system (1, 1b) in a form-locking manner,
**characterised in that**
at least one of the face toothing systems (1, 1a, 1b) comprises at least one groove (39) of constant width (B), the longitudinal centre line (LN) of the groove (39) forming, in at least one section of said groove (39), a semicircular arc (41) with a first circle centre-point(M1) and, in at least one other section of said groove (39), a semicircular arc with a second circle centre-point (M2).

2. Coupling according to Claim 1, **characterised in that** the longitudinal centre line (LN) of the groove (39) forms at least two semicircular arcs which are associated with the first circle centre-point (M1) and the second circle centre-point (M2) alternately.

3. Coupling according to the pre-characterising clause of Claim 1,
**characterised in that**
at least one of the face toothing systems (1, 1a, 1b) comprises at least one groove (39) of constant width (B), and that the longitudinal centre lines (LN) of the grooves (39) form at least one circular arc-shaped section (41) and at least one straight section (42), said circular arc-shaped section (41) being associated with a centre-point (M1).

4. Coupling according to Claim 3, **characterised in that** each circular arc has a centre-point angle of α ≤ 180°.

5. Coupling according to one of the preceding claims, **characterised in that** at least sections (42) of the longitudinal centre lines (LN) of the grooves (39) are arranged parallel to one another.

6. Coupling according to one of the preceding claims, **characterised in that** at least one of the face toothing systems comprises at least two grooves and/or at least two webs, and that the grooves (39) have an identical groove width (B) to one another and the webs (40) have an identical web width (B) to one another.

7. Coupling according to one of the preceding claims, **characterised in that** all the groove widths (B) and all the web widths (B) are identical.

8. Coupling according to one of the preceding claims, **characterised in that** the groove (39) is constructed so as to be trapezoidal in cross-section in relation to a longitudinal axis (LN).

9. Coupling device for connecting at least two components with at least two couplings (50) according to one of the preceding claims, wherein one of the complementary face toothing systems (1b) of the coupling (50) is associated with the component (29, 30, 31, 32) and the other of the face toothing systems (1a) is associated with a coupling element (28) which has at least two face toothing systems (1a).

## Revendications

1. Accouplement à denture droite pour la transmission de couples et/ou de forces transversales entre une première pièce (4) laquelle est munie d'une première denture droite (1, 1a) et une deuxième pièce (5) laquelle est munie d'une deuxième denture droite (1, 1b) conçue de façon complémentaire par rapport à la première denture droite, au moins une des parties étant en particulier un arbre, un axe, un boulon ou une bride, et la première denture droite (1, 1 a) pouvant être amenée par complémentarité de forme avec la deuxième denture droite (1, 1 b), **caractérisé en ce qu'**au moins une des dentures droites (1, 1 a, 1 b) comprend au moins une rainure (39) de largueur constante (B), la ligne médiane longitudinale (LN) de la rainure (39) formant dans au moins une section de la rainure (39) un arc en demi-cercle (41) avec un premier centre de cercle (M1) et dans au moins une autre section de la rainure (39) un arc en demi-cercle avec un deuxième centre de cercle (M2).

2. Accouplement selon la revendication 1, **caractérisé en ce que** la ligne médiane longitudinale (LN) de la rainure (39) forme au moins deux arcs en demi-cercle qui sont associés alternativement au premier centre de cercle (M1) et au deuxième centre de cercle (M2).

3. Accouplement selon le préambule de la revendication 1, **caractérisé en ce qu'**au moins une des dentures droites (1, 1 a, 1 b) comprend au moins une rainure (39) de largeur constante (B) et **en ce que** les lignes médianes longitudinales (LN) des rainures (39) forment au moins une section en forme d'arc de cercle (41) et au moins une section droite (42), la section en forme d'arc de cercle (41) étant associée à un foyer (M1).

4. Accouplement selon la revendication 3, **caractérisé en ce que** chaque arc de cercle présente un angle au centre de α ≤ 180°.

5. Accouplement selon l'une des précédentes revendications, **caractérisé en ce qu'**au moins des sections (42) des lignes médianes longitudinales (LN) des rainures (39) sont disposées parallèlement les unes aux autres.

6. Accouplement selon l'une des précédentes revendications, **caractérisé en ce qu'**au moins une des dentures droites comprend au moins deux rainures et/ou au moins deux nervures et **en ce que** les rainures (39) présentent entre elles une largeur de rainure (B) identique, et les nervures (40), entre elles, une largeur de nervure (B) identique.

7. Accouplement selon l'une des précédentes revendications, **caractérisé en ce que** toutes les largeurs de rainures (B) et toutes les largeurs de nervures (B) sont identiques.

8. Accouplement selon l'une des précédentes revendications, **caractérisé en ce que** la rainure (39) est conçue, en section transversale par rapport à un axe longitudinal (LN), de forme trapézoïdale.

9. Dispositif d'accouplement pour relier au moins deux éléments de construction avec au moins deux accouplements (50) selon l'une des précédentes revendications, une des dentures droites (1 b) complémentaires de l'accouplement (50) étant associée à l'élément de construction (29, 30, 31, 32) et l'autre des dentures droites (1a), à un élément d'accouplement (28), lequel présente au moins deux dentures droites (1a).
